# EUROPÄISCHE PATENTSCHRIFT

(11) **EP 2 363 743 B1**
(45) Veröffentlichungstag und Bekanntmachung des Hinweises auf die Patenterteilung: **27.05.2015**
(21) Anmeldenummer: 11153403.8
(22) Anmeldetag: 04.02.2011
(51) Int. Cl.: G02C 7/06

(54) **Linsenelement mit verbesserter prismatischer Wirkung**
Lens element with improved prismatic effect
Elément de lentille doté d'un effet prismatique amélioré

(30) Priorität: 08.02.2010 DE 102010007267; 08.02.2010 US 302330 P
(43) Veröffentlichungstag der Anmeldung: 07.09.2011
(73) Patentinhaber: Carl Zeiss Vision International GmbH, 73430 Aalen (DE)
(72) Erfinder: Wietschorke, Helmut, 73433 Aalen (DE)
(74) Vertreter: Witte, Weller & Partner Patentanwälte mbB

(56) Entgegenhaltungen:
- EP-A1- 1 895 351
- WO-A1-2006/084121
- WO-A1-2008/000397
- WO-A1-2008/089996

## Beschreibung

Die vorliegende Erfindung betrifft ein Verfahren zum Herstellen eines Linsenelements mit mindestens einem Nahbereich und einem Fernbereich, die unterschiedliche fokussierende Wirkungen aufweisen, sowie einer gesamtprismatischen Wirkung.

Ein derartiges Verfahren ist beispielsweise aus der Druckschrift US 7 216 977 B2 bekannt.

Brillenlinsen zur Korrektion von Fehlsichtigkeiten sind allgemein bekannt. Insbesondere ist es auch bekannt, Linsenelemente für Brillen herzustellen, die eine multifokale optische Wirkung aufweisen. Diese dienen insbesondere zur Korrektion der Altersfehlsichtigkeit, d.h. einer aufgrund von Alterserscheinungen hervorgerufenen Verminderung der Akkommodationsfähigkeit des Auges.

In der Augenoptikfertigung wird ausgehend von einer dioptrischen Verordnung, die beispielsweise von einem Augenarzt festgelegt wird, ein Brillenglas hergestellt, das an vorgegebenen Mess- und Bezugspunkten vorgegebene dioptrische Wirkungen an durch diese Punkte verlaufenden Strahlengängen erzielt. Die Lage der Mess- und Bezugspunkte hängt von der Art des Glases ab, beispielsweise ob es sich um ein Einstärken- oder Mehrstärkenglas handelt, und wird vom Hersteller festgelegt.

Bezüglich der im Folgenden verwendeten Terminologie und der Definition ihrer jeweiligen Bedeutung wird auf die Norm DIN EN ISO 13 666 verwiesen, in der das Vokabular der Augenoptik normiert ist. Dabei steht DIN für das "Deutsche Institut für Normung e. V.", EN für "Europäische Norm" und ISO für die "Internationale Organisation für Normung". Soweit nachstehend nicht explizit anders definiert, gelten die in der Norm definierten Bedeutungen. Insbesondere finden sich dort die Definitionen der folgenden Begriffe: Nah- und Fern-Konstruktionspunkt bzw. Nah- und Fern-Konstruktionsbezugspunkt (Kapitel 5.13 und 5.14), Gleitsichtfläche (7.7), Gleitsicht(brillen)glas (8.3.5), Fernteil bzw. Fernbereich (14.1.1), Nahteil bzw. Nahbereich (14.1.3), Progressionskanal (14.1.25), Addition (14.2.1), Dickenreduktionsprisma (14.2.11) und Prismenbezugspunkt (14.2.12).

Eine Gleitsichtbrille zeichnet sich dabei insbesondere dadurch aus, dass jedes Linsenelement mindestens zwei Bereiche mit unterschiedlichen fokussierenden Wirkungen aufweist, die für das Sehen bei unterschiedlichen Objektentfernungen konzipiert sind. Im Gegensatz zu herkömmlichen Multifokal-Linsenelementen, bei denen ein abrupter Übergang zwischen den unterschiedlichen Bereichen auftritt, zeichnen sich Gleitsicht-Linsenelemente dadurch aus, dass sich die fokussierende Wirkung kontinuierlich zwischen den Bereichen ändert. Gleitsichtbrillen sind daher "glatt", d.h. die Funktionen der Flächen der Vorder- und der Rückseite der Linsenelemente sind zweimal stetig differenzierbar. Im Allgemeinen enthält ein Linsenelement für eine Gleitsichtbrille dabei einen in einem oberen Teil des Glases gelegenen Bereich für das Sehen für größere Objektentfernungen, einen sog. "Fernbereich", und einen darunter liegenden Bereich für das Sehen für kleinere Objektentfernungen, einen sog. "Nahbereich". Die Begrifflichkeiten "oben" bzw. "unten" beziehen sich dabei auf die Orientierung des Linsenelements, wenn es von einem Nutzer getragen wird. Zwischen dem Nahbereich und dem Fernbereich liegt ein Übergangsbereich mit kontinuierlicher Wirkungsänderung, der sogenannte "Progressionsbereich".

Der Hersteller legt dabei jeweils sowohl für den Fern- als auch für den Nahbereich einen Messpunkt fest, an dem die dioptrische Wirkung des jeweiligen Bereichs kontrolliert werden kann, den so genannten "Fern-Konstruktionspunkt" bzw. "Nah-Konstruktionspunkt". Außerdem legt er noch einen weiteren Punkt fest, an dem die prismatische Wirkung des Linsenelements zu realisieren ist und kontrolliert werden kann, den sog. "Prismenbezugspunkt".

Die prismatische Wirkung an dem Prismenbezugspunkt bestimmt sich aus der verordneten prismatischen Wirkung und einem Dickenreduktionsprisma. Das Dickenreduktionsprisma ist eine prismatische Wirkung mit vertikaler Basislage, d.h. durch das Dickenreduktionsprisma findet lediglich eine Strahlablenkung in vertikaler Richtung statt, ohne eine horizontale Ablenkung, um die Dicke des Linsenelements der Gleitsichtbrille zu vermindern und die horizontale Komponente der prismatischen Wirkung nicht zu verändern. Das Dickenreduktionsprisma muss in beiden Linsenelementen einer Brille gleich sein. Die sich aus der verordneten prismatischen Wirkung und dem Dickenreduktionsprisma ergebende gesamtprismatische Wirkung kann dann entweder für einen Strahlengang bei Verwendung durch einen tatsächlichen Brillenträger oder für einen Strahlengang in einem Messgerät ausgelegt sein.

Die dioptrische Wirkung an einem Punkt auf dem Brillenglas setzt sich aus der fokussierenden Wirkung und der prismatischen Wirkung zusammen. Die fokussierende Wirkung besteht aus der sphärischen (sph) und der astigmatischen Wirkung, wobei die astigmatische Wirkung die Zylinderstärke (bzw. die astigmatische Differenz cyl) und die Achslage (A) beinhaltet. Die prismatische Wirkung besteht aus der prismatischen Ablenkung (Pr) und der Basislage (B). Betrachtet man die fokussierenden und prismatischen Wirkungen über die Punkte eines ganzen Bereichs des Linsenelementes, so ergibt sich ein enger Zusammenhang zwischen beiden Wirkungen. Dieser Zusammenhang wird z.B. vereinfacht mit der Prentice-Formel beschrieben. So führt eine in einem größeren Bereich konstante fokussierende Wirkung eines Linsenelements eines Brillenglases zu einer bestimmten kontinuierlichen Änderung der prismatischen Wirkung in diesem Bereich. Daher wird bei Standard-Linsenelementen für Gleitsichtbrillen, die eine sphärisch-torische Rezeptfläche und eine Gleitsichtfläche, die für einen bestimmten Bereich von vorgegebenen Wirkungen unverändert bleibt, aufweisen, die prismatische Wirkung nur an einer Stelle des Linsenelements fest vorgegeben, da (bei vorgegebener Gleitsichtfläche) mit der erforderlichen sphärisch-torischen Rezeptfläche im Allgemeinen nicht an mehr als einer Stelle im Linsenelement vorgegebene prismatische Wirkungen erzielt werden können. Aber auch bei individuell optimierten Linsenelementen führt eine feste prismatische Vorgabe an mehr als einem Punkt im Allgemeinen zu großen zusätzlichen sphärischen oder astigmatischen Abbildungsfehlern.

Der Prismenbezugspunkt, d.h. derjenige Punkt, an dem die prismatische Wirkung fest vorgegeben wird, ist vorzugsweise an einen Ort gelegt, der für das Sehen hauptsächlich verwendet wird. Entfernt man also seinen Blick von diesem Prismenbezugspunkt, so vergrößert sich die Differenz der tatsächlichen prismatischen Wirkung zu der prismatischen Wirkung am Prismenbezugspunkt mit zunehmendem Abstand. Der Grund hierfür ist die fokussierende Wirkung des Linsenelements des Brillenglases.

Dies hat jedoch zur Folge, dass bei Anisometropie, d.h. bei unterschiedlichen dioptrischen Verordnungen für die beiden Augen eines Brillenträgers, im Allgemeinen die prismatischen Wirkungen an sich entsprechenden Stellen von dem linken und dem rechten Linsenelement einer Brille nicht gleich sind. Liegt der Prismenbezugspunkt im Fernbereich, so ergeben sich bei Anisometropie zwar in unmittelbarer Umgebung des Prismenbezugspunkts ähnliche prismatische Wirkungen für entsprechende Punkte im Fernbereich, aber dafür größere prismatische Unterschiede im Nahbereich. Diese prismatischen Unterschiede im Nahbereich vergrößern sich dann näherungsweise proportional zum sphärischen Wirkungsunterschied zwischen den Verordnungen für das rechte und das linke Auge. Ähnliches gilt für eine Lage des Prismenbezugspunktes im Nahteil.

Es ist bekannt, dass sich die prismatische Wirkung vektoriell in einen Horizontalanteil und einen Vertikalanteil aufspalten lässt. Dies ist beispielsweise aus dem Fachartikel "Astigmatische und prismatische Einstärken-Brillengläser", Alfred Schikorra, Sonderdruck aus der Fachzeitschrift "Der Augenoptiker", Verlag Willy Schrickel, Leinfelden, 1987, bekannt. Daher ist bekannt, dass bei einer Lage des Prismenbezugspunktes in dem Progressionsbereich oder auch am Übergang von Fernbereich zu Progressionsbereich der Horizontalanteil der prismatischen Wirkung im Fernbereich im Allgemeinen nicht mit dem Horizontalanteil der verordneten prismatischen Wirkung übereinstimmt. Dieser Unterschied ergibt sich vor allem aus der verkippten Gebrauchsstellung des Linsenelements vor dem Auge eines Brillenträgers oder durch eine astigmatische Verordnung. Bei Gläsern mit einer astigmatischen Verordnung und schiefer Achslage ist er dabei besonders ausgeprägt. Dadurch wird der Brillenträger dann aber zu einer unnatürlichen Konvergenz- bzw. Divergenzbewegung des Augenpaares bei einem Blick durch den Fernbereich gezwungen, was nicht nur ein unangenehmes Tragegefühl hervorruft, sondern auch möglicherweise Folgeschäden über einen längeren Zeitraum hervorrufen kann.

Das bereits eingangs genannte Dokument US 7 216 977 B2 schlägt für Gleitsichtgläser mit astigmatischer Verordnung ≤ 1 Dioptrien eine kontinuierliche Zunahme der horizontalen prismatischen Wirkung entlang einer Hauptblicklinie vor, so dass die Differenz zwischen der horizontalen prismatischen Wirkung am Fern- und am Nahbezugspunkt mindestens 2 Dioptrien beträgt. Durch diese zusätzliche Anforderung an das Gleitsichtglas ergeben sich aber große zusätzliche sphärische oder astigmatische Fehler für den Brillenträger, da diese Vorgehensweise viele zusätzliche horizontalprismatische Anforderungen entlang der Hauptblicklinie voraussetzt. In dieser Druckschrift werden zudem keine Angaben darüber gemacht, wie der Vertikalanteil der prismatischen Wirkung zu realisieren ist.

Die Druckschrift FR 2 814 819 A1 schlägt ein Gleitsichtglas mit einem eine Konvergenz der Augen unterstützenden horizontalen Prisma vor, das entweder nur im Nahbereich, über das gesamte Gleitsichtglas oder ansteigend vom Fern- zu dem Nahbereich entlang der Hauptblicklinie vorliegt. Auf die Auswirkungen dieser horizontalprismatischen Forderung auf die sonstigen Abbildungsfehler, die prismatischen Auswirkungen für den Brillenträger in dem Fernbereich des Gleitsichtglases sowie die Realisierung eines möglicherweise verordneten Prismas wird nicht eingegangen.

Die Druckschrift EP 1 412 806 B1 schlägt vor, einem Glas ein Vertikalprisma zuzufügen, um die Abbildungsgüte des Glases zu verbessern. Auf Änderungen des Horizontalanteils einer prismatischen Wirkung wird aber nicht eingegangen.

Die Druckschrift EP 1 107 849 B1 schlägt vor, in einem Nahbereich ein zusätzliches Prisma einzubringen, um das optische Zentrum so nah wie möglich an das Zentrum des Nahbereichs zu führen, d.h. das Ziel ist in dieser Druckschrift, den Nahbereich durch ein vertikales Prisma zu verbessern. Auf Änderungen des Horizontalanteils einer prismatischen Wirkung wird aber nicht eingegangen.

Die Druckschrift DE 698 13 803 T2 beschreibt eine Korrektur eines peripheren Bereichs eines Linsenelements mit großer Durchbiegung mittels eines Horizontalprismas. Dies kann auch eine Oberflächenkorrektur in der Sichtzone mit einbeziehen, um optische Fehler zu minimieren. Dabei wird aber nicht auf den Zusammenhang zwischen mehreren prismatischen Anforderungen an ein einzelnes Linsenelement und die sich daraus typischerweise ergebenden Einbußen bei der Abbildungsqualität eingegangen. Auch auf die speziellen Anforderungen bei Gleitsichtgläsern wird nicht eingegangen.
Des Weiteren zeigt die Druckschrift WO 2008/089996 A1 ein Verfahren zum Berechnen eines individuellen Brillenglasdesigns für ein progressives Brillenglas und die Druckschrift WO 03/079095 A2 ein progressives Brillenglas mit zwei asphärischen und insbesondere progressiven Flächen. Des Weiteren zeigt die Druckschrift WO 2008/089996 A1 ein Verfahren zum Optimieren eines Brillenglases eines Paars von Brillengläsern bei Anisometropie. Alle Druckschriften beschäftigen sich jedoch nicht mit der Zerlegung einer prismatischen Wirkung in einen Horizontalanteil und einen Vertikalanteil sowie deren Realisierung in unterschiedlichen Punkten des Brillenglases, um so die Abbildungsqualität zu verbessern.

Es ist daher Aufgabe der vorliegenden Erfindung, ein verbessertes Linsenelement für eine Gleitsichtbrille bereitzustellen.

Gemäß der Erfindung wird des Weiteren vorgeschlagen, das eingangs genannte Verfahren dahingehend weiterzubilden, dass die gesamtprismatische Wirkung in ihren Horizontalanteil und ihren Vertikalanteil zerlegt wird und dass der Vertikalanteil der gesamtprismatischen Wirkung in einem ersten Punkt des Linsenelements und der Horizontalanteil der gesamtprismatischen Wirkung in einem von dem ersten Punkt verschiedenen zweiten Punkt des Linsenelements realisiert wird.

Bei dem erfindungsgemäßen Linsenelement für eine Gleitsichtbrille wird somit die prismatische Verordnung in einen Horizontal- und einen Vertikalanteil zerlegt und beide Forderungen an unterschiedlichen Stellen bzw. Orten des Linsenelements realisiert. Dies bedeutet, dass der Bezugspunkt, in dem der Horizontalanteil realisiert wird, ein anderer ist als derjenige Punkt, in dem der Vertikalanteil realisiert ist. Unter "realisiert" ist dabei zu verstehen, dass die prismatische Wirkung in dem jeweiligen Bezugspunkt derjenigen der Verordnung (plus eines eventuellen Dickenreduktionsprismas) entspricht und in diesem Punkt kontrolliert werden kann. Die Bezugspunkte des Vertikalanteils und des Horizontalanteils sind somit verschieden. Unter "Prismenbezugspunkt" wird jedoch im Verlaufe dieser Beschreibung nach wie vor der gemäß der üblichen Lehre verwendete Prismenbezugspunkt verstanden, d.h. derjenige Bezugspunkt, der verwendet wird, wenn sowohl Horizontal- als auch Vertikalanteil sowie ein Dickenreduktionsprisma in demselben Punkt realisiert werden.

Die Aufteilung der prismatischen Forderungen an zwei verschiedene Orte in dem Linsenelement ist ohne nennenswerte Einbußen bezüglich der astigmatischen und der sphärischen Abbildungsfehler möglich, da eine prismatische Forderung zu einer Verkippung der zugehörigen Flächenelemente von Vorder- und Rückfläche zueinander führt. Die notwendige Kipprichtung der Flächenelemente hängt dabei unmittelbar von der Basislage der prismatischen Forderung ab. Da die Kipprichtung der Flächen für den Horizontalanteil und den Vertikalanteil der prismatischen Forderungen jedoch senkrecht zueinander stehen, können sie unabhängig voneinander realisiert werden, ohne dass nennenswerte Einbußen bzgl. der sphärischen und astigmatischen Abbildungsfehler entstehen.

Die eingangs gestellte Aufgabe wird somit vollkommen gelöst.

Es kann bei dem Verfahren gemäß der Erfindung vorgesehen sein, dass der zweite Punkt ein Punkt in dem Fernbereich ist. Auch dort kann ein Dickenreduktionsprisma in dem ersten Punkt realisiert werden.

Mit dieser Aufteilung der prismatischen Forderung erreicht man die natürliche horizontale Augenstellung für das Sehen in dem Fernbereich. Dadurch bedingt ist jedoch möglicherweise die Forderung des Horizontalanteils der prismatischen Forderung in dem Prismenbezugspunkt nicht mehr erfüllt. Dies ist aber nur von geringerer Bedeutung, da in dem Progressionsbereich, in dem der Prismenbezugspunkt liegt, das Glas im Allgemeinen für den Blick auf ein Objekt in einer Zwischenentfemung konzipiert ist. Für diese Zwischenentfernung ist ohnehin eine zusätzliche Konvergenzbewegung der Augen nötig, egal ob die Forderung an den Horizontalanteil der prismatischen Forderung im Fern- oder Progressionsbereich realisiert wird. Somit kann eine Änderung der Konvergenzbewegungen bedingt durch die Realisierung des Horizontalanteils der prismatischen Forderung im Fernbereich in Kauf genommen werden. Gleiches gilt für den Nahbereich.

Durch dieses Vorgehen kann des Weiteren erreicht werden, dass bei einer Anisometropie in einem zentralen Fernbereich der Wirkungsunterschied des Horizontalanteils der prismatischen Forderung an korrespondierenden Stellen in einem rechten und einem linken Linsenelement einer Brille ähnlich ist. Außerdem bleibt bei Anisometropie der Wirkungsunterschied des Vertikalanteils der prismatischen Forderung an entsprechenden Stellen eines rechten und eines linken Linsenelements einer Brille gleich, da sich der Bezugspunkt des Vertikalanteils nach wie vor in dem Prismenbezugspunkt befindet. Dies bedeutet, dass bezüglich der Forderung des Vertikalanteils der prismatischen Forderung ein Ausgleich der prismatischen Unterschiede zwischen dem rechten und dem linken Linsenelement für Fern- und Nahbereich stattfinden kann.

Durch die vorgeschlagene Anordnung kann sich lediglich der horizontalprismatische Wirkungsunterschied durch den Horizontalanteil der prismatischen Forderung zwischen entsprechenden Punkten in dem Progressions- und dem Nahbereich verändern. Dies ist aber hinnehmbar, da beim Blick durch den Progressions- und durch den Nahbereich, wie bereits voranstehend ausgeführt wurde, eine Konvergenzbewegung der Augen nötig ist. Die durch die Wahl des Bezugspunkts des Horizontalanteils der prismatischen Wirkung hingenommenen Abweichungen im Progressions- und im Nahbereich bewirken somit keine Verschlechterung des Tragekomforts der Brille. Die Abweichungen liegen in einem Bereich, in dem die Augen ohnehin eine Konvergenzbewegung vollführen, so dass lediglich eine andere Konvergenzbewegung durchgeführt wird, als dies bei herkömmlicher Wahl des Bezugspunkts des Horizontalanteils der Fall wäre. Mitunter kann sich durch diese Vorgehensweise sogar eine zusätzliche, die Konvergenzbewegung des Auges unterstützende prismatische Wirkung in dem Nahbereich ergeben.

Wie bereits voranstehend ausgeführt wurde, kann der zweite Punkt, d.h. der Bezugspunkt des Horizontalanteils, ein Punkt in dem Fernbereich sein. Der zweite Punkt kann aber auch dem Durchstoßpunkt der Strahlen durch das Linsenelement in Nullblickrichtung entsprechen. Entsprechend kann auch vorgesehen sein, dass der zweite Punkt dem Durchstoßpunkt der Strahlen durch das Linsenelement in Nullblickrichtung entspricht und gleichzeitig der erste Punkt in dem Prismenbezugspunkt übereinstimmt, an dem auch das Dickenreduktionsprisma realisiert ist.

Bei dem Verfahren der Erfindung kann vorgesehen sein, dass weder der erste Punkt noch der zweite Punkt in dem Nahbereich liegt.

Außerdem kann bei dem Verfahren gemäß der Erfindung kann vorgesehen sein, dass der Fernbereich und der Nahbereich in einem Progressionsbereich kontinuierlich ineinander übergehen, wobei der erste Punkt an einem Ort des Progressionsbereichs liegt, an dem mindestens 20 % einer Addition des Linsenelements erreicht sind.

Unter "Addition" ist dabei gemäß dem üblichen Verständnis des Fachmanns der Zuwachs der mittleren sphärischen Wirkung von dem Fernbereich zu dem Nahbereich zu verstehen. Unter mittlerer sphärischer Wirkung an einem Punkt im Linsenelement wird die Summe aus sphärischer Wirkung im ersten Hauptschnitt und halber astigmatischer Differenz bezeichnet (sph + 0.5*cyl). Der Zuwachs dieser mittleren sphärischen Wirkung beträgt somit im Fernbereich 0 % und im Nahbereich 100 % der Addition und steigt im Progressionsbereich kontinuierlich an.

Letztlich kann vorgesehen sein, dass bei dem Verfahren gemäß der Erfindung das Linsenelement eine zylindrische Wirkung (cyl) von mehr als 0,5 Dioptrien bei einer Achslage (A) aufweist, für die gilt: 10° < A < 80° oder 100° < A < 170°, insbesondere 20° < A < 70° oder 110° < A < 160°, insbesondere 30° < A < 60° oder 120° < A < 150°, insbesondere 40° < A < 50° oder 130° < A < 140°.

Die Realisierung der prismatischen Anforderungen kann beispielsweise durch eine geeignete Verkippung der Flächen des Linsenelements erfolgen. Bei individuell optimierten Gleitsichtgläsern bzw. Linsenelementen können die erfindungsgemäß veränderten prismatischen Anforderungen aber auch direkt bei der Optimierung der Gleitsichtfläche berücksichtigt werden.

Es versteht sich, dass die vorstehend genannten und die nachfolgend noch zu erläuternden Merkmale nicht nur in der jeweils angegebenen Kombination, sondern auch in Alleinstellung oder in anderen Kombinationen verwendbar sind, ohne den Rahmen der vorliegenden Erfindung zu verlassen.

Ausführungsbeispiele der Erfindung sind nachfolgend mit Bezugnahme auf die anliegende Zeichnung erläutert. Es zeigen:
- Fig. 1: eine schematische Ansicht einer Ausführungsform eines Linsenelements,
- Fig. 2: eine schematische Ansicht zweier für eine Brille vorgesehener Linsenelemente gemäß der Ausführungsform in Fig. 1,
- Fig. 3: den Verlauf eines Horizontalprismas entlang der Hauptblicklinie eines Linsenelements gemäß der Ausführungsform in Fig. 1,
- Fig. 4: den Verlauf eines Horizontalprismas entlang der Hauptblicklinie eines üblichen Linsenelements,
- Fig. 5: die Verteilung astigmatischer Abbildungsfehler über das gesamte Linsenelement in Fig. 3,
- Fig. 6: die Verteilung astigmatischer Abbildungsfehler über das gesamte Linsenelement in Fig. 4, und
- Fig. 7: ein schematisches Ablaufdiagramm eines Verfahrens gemäß einer weiteren Ausführungsform der Erfindung.

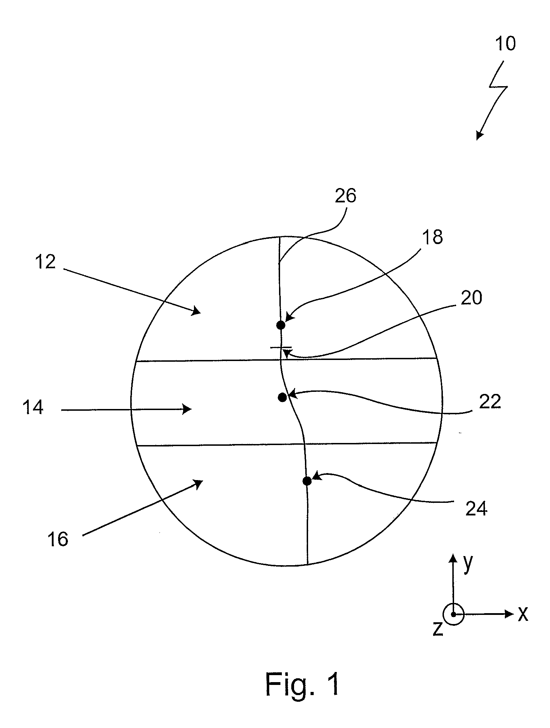

Fig. 1 zeigt ein Linsenelement 10 gemäß einer bevorzugten Ausführungsform. Das Linsenelement 10 ist dazu vorgesehen, in einer Gleitsichtbrille verwendet zu werden. Das Linsenelement 10 ist in Fig. 1 lediglich schematisch dargestellt, beispielhaft wurde eine kreisrunde Form des Linsenelements 10 dargestellt, selbstverständlich kann das Linsenelement 10 auch jede andere Form aufweisen.

In Fig. 1 sind verschiedene Sehbereiche des Linsenelements 10 dargestellt. Im oberen Teil des Linsenelements 10 befindet sich ein Fernbereich 12, der für die Betrachtung von weit entfernten Objekten vorgesehen ist. Der Fernbereich 12 geht über einen Progressionsbereich 14 in einen Nahbereich 16 über, der sich in einem unteren Teil des Linsenelements 10 befindet. Der Nahbereich 16 ist dazu vorgesehen, nahe gelegene Objekte zu betrachten. In der Regel dient der Fernbereich 12 dazu, eine verordnete fokussierende Wirkung für ein Sehen in der Ferne zu realisieren. Der Nahbereich 16 dient dazu, eine verordnete fokussierende Wirkung für ein Sehen in der Nähe zu realisieren. Ein Wirkungszuwachs steigt von dem Fernbereich 12, in dem kein Wirkungszuwachs vorhanden ist, kontinuierlich bis zu dem Nahbereich 16 an. So sind an dem Übergang von dem Fernbereich 12 zu dem Progressionsbereich 14 0 % der Addition vorhanden und an dem Übergang von dem Progressionsbereich 14 zu dem Nahbereich 16 dann 100 % der Addition vorhanden.

In dem Fernbereich liegt ein Fern-Konstruktionspunkt 18, in dem die Korrektion für den Fernbereich 12 realisiert ist.

Unterhalb des Fern-Konstruktionspunkts 18 befindet sich ein Anpasspunkt 20. Unterhalb des Anpasspunkts 20 befindet sich im Progressionsbereich 14 ein Prismenbezugspunkt 22. Innerhalb des Nahbereichs 16 befindet sich des Weiteren ein Nah-Konstruktionspunkt 24. Die Darstellung in Fig. 1 ist selbstverständlich nur auf das konkrete Ausführungsbeispiel bezogen. Grundsätzlich ist auch eine andere Verteilung der Punkte möglich.

Der Nah-Konstruktionspunkt 24 stellt den Punkt dar, für den die Korrektionswirkung im Nahbereich realisiert ist. Der Nah-Konstruktionspunkt 24 in dem Nahbereich 16 entspricht somit in seiner Funktion dem Fern-Konstruktionspunkt 18 in dem Fernbereich 12.

Ein Dickenreduktionsprisma zur Reduzierung der Dicke des Linsenelements 10 ist in dem Prismenbezugspunkt 22 realisiert.

Eine verordnete prismatische Wirkung des Linsenelements 10 ist in einen Horizontalanteil und einen Vertikalanteil zerlegt. Der Vertikalanteil und der Horizontalanteil der verordneten prismatischen Wirkung sind in dem Linsenelement 10 jedoch jeweils in unterschiedlichen Punkten realisiert. So ist der Vertikalanteil der prismatischen Wirkung in dem Prismenbezugspunkt 22 realisiert, grundsätzlich kann er jedoch in einem beliebigen ersten Punkt realisiert werden. Der Horizontalanteil der verordneten prismatischen Wirkung ist in der in Figur 1 dargestellten Ausführungsform in dem Anpasspunkt 20 realisiert. Der Horizontalanteil kann jedoch in einem beliebigen zweiten Punkt, insbesondere in einem Punkt in dem Fernbereich 12, realisiert werden.

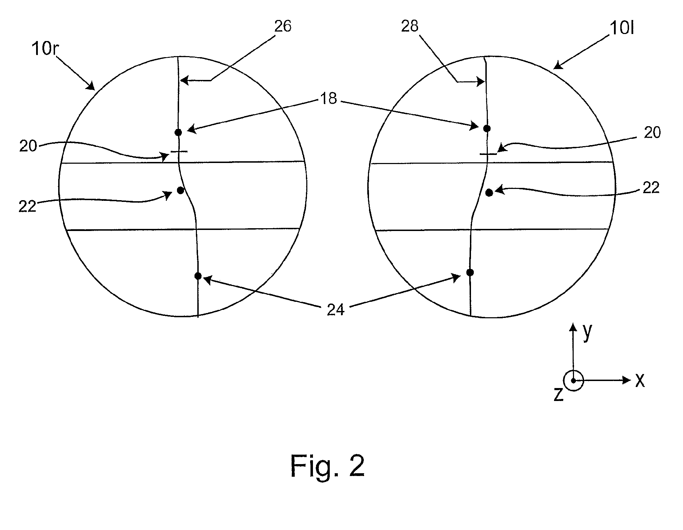

Fig. 2 zeigt zwei Linsenelemente 10r, 101 gemäß der in Fig. 1 dargestellten Ausführungsform, wie sie in einer Gleitsichtbrille verwendet werden. Das Linsenelement 10r ist dabei für das rechte Auge bestimmt, das Linsenelement 101 für das linke Auge. Die Ansicht in Fig. 2 blickt somit von vorne auf die Linsenelemente in Ihrer Gebrauchsstellung bzw. einen Brillenträger. Die Lage des Fern-Konstruktionspunkts 18, des Prismenbezugspunkts 22, des Nah-Konstruktionspunkts 24 und des Anpasspunkts 20 entsprechen der in Fig. 1 dargestellten Ausführungsform. Eingezeichnet sind des Weiteren eine Hauptblicklinie 26 des Linsenelements 101 für das linke Auge und eine Hauptblicklinie 28 für das Linsenelement 10r des rechten Auges. Die Lage der Hauptblicklinie ist unter anderem abhängig vom Abstand des Linsenelements zu einem Auge des Brillenträgers. In der Regel verläuft sie jedoch sehr nahe zu einem so genannten Hauptprogressionsmeridian, der dem Verlauf der Minima des astigmatischen Abbildungsfehlers des Linsenelements 10 in einem zentralen Bereich des Progressionsbereich 14 folgt, wobei die Minima sich aus der Lage des Minimums des astigmatischen Abbildungsfehlers entlang einer Horizontalen (d.h. in X-Richtung) ergeben.

Die Hauptblicklinie ist definiert durch die Strahldurchstoßpunkte durch eine Glasvorderfläche bei einem Blick des Brillenträgers auf Objekte, die bei bestimmungsgemäßen Objektentfernungen direkt vor ihm liegen. Ein standardisiertes Objektabstandsmodell ist bspw. in der DIN (Deutsches Institut für Normung e.V.) 58208 Teil 2 angegeben. Die bestimmungsgemäßen Objektentfernungen können jedoch von diesem Modell abweichen. Wie zu erkennen ist, bewegen sich die Hauptblicklinien 26, 28 von dem Fernbereich 12 hin zu dem Nahbereich 16 aufeinander zu. Die Nah-Konstruktionspunkte 24 sind somit weniger voneinander beabstandet als die Fern-Konstruktionspunkte 18.

Daraus wird ersichtlich, dass die Augen eines Brillenträgers ohnehin eine konvergierende Bewegung vollführen, wenn sie ein Objekt durch den Nahbereich 16 betrachten. Daher ist die sich in dem Nahbereich 16 ergebende Abweichung des Horizontalanteils von der verordneten prismatischen Wirkung, die durch die Realisierung des Horizontalanteils in dem Fernbereich verursacht wird, hinnehmbar. Gleiches gilt für den Progressionsbereich 14, in dem sich die Hauptblicklinien 26, 28 aufeinander zu bewegen.

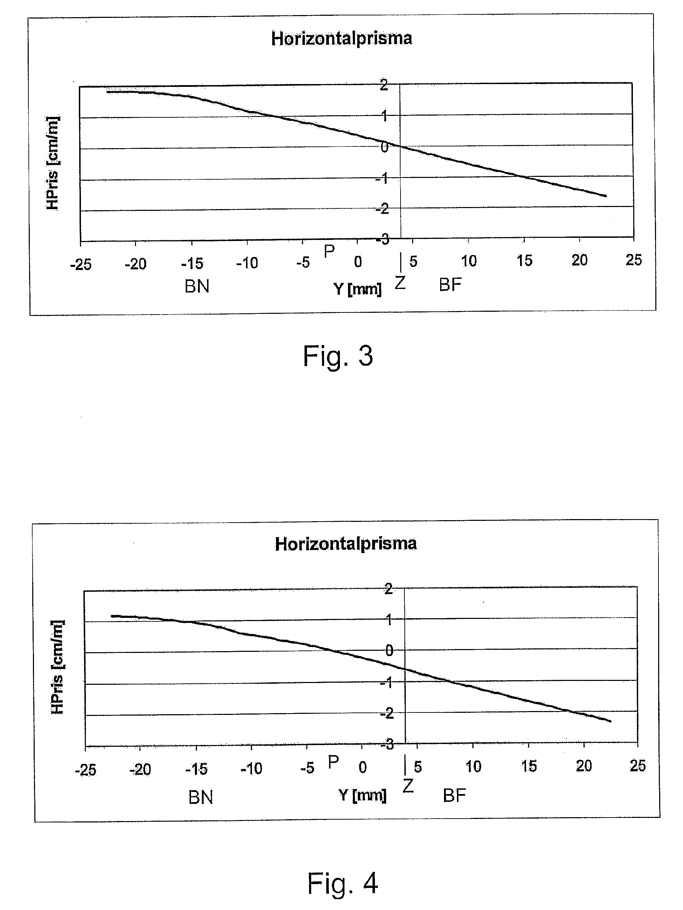

Fig. 3 zeigt die Verteilung des Horizontalprismas entlang der Hauptblicklinie des Linsenelements gemäß der Ausführungsform in Fig. 1. Beispielhaft wurde der Verlauf für ein Gleitsichtglas mit einer Fernwirkung sph - 1.0 dpt cyl 2.0 dpt A 135° und der Addition 2.0 mit vorderseitiger Gleitsichtfläche erstellt. Vorliegend wird unter einer "Gleitsichtfläche" eine nicht-rotationssymmetrische Fläche mit einer kontinuierlichen Änderung der Krümmung über die gesamte Fläche oder einen Teil davon verstanden, vgl. DIN ISO (Internationale Organisation für Normung) 13666. Für die jeweiligen Punkte gelten in diesem Beispiel die folgenden Y-Koordinaten: Fern-Konstruktionspunkt (BF) = 7, Anpasspunkt (Z) = 4, Prismenbezugspunkt (P) = -2 und Nah-Konstruktionspunkt (BN) = -14. Durch die Verkippung der Rückfläche gemäß der Ausführungsform der Erfindung beträgt der Horizontalanteil der prismatischen Verordnung in dem Anpasspunkt 0. Bei dem Anpasspunkt A kann es sich beispielsweise um die Nullblickrichtung in dem Fernbereich 12 handeln, so dass hier keine prismatische Wirkung des Horizontalanteils auftritt und ein entsprechend verbesserter Tragekomfort gegeben ist.

Fig. 4 zeigt zum Vergleich den Verlauf des Horizontalprismas entlang der Hauptblicklinie für ein herkömmliches Gleitsichtglas mit torischer Rückfläche. Für die Referenzpunkte gelten die gleichen Y-Koordinaten. Die prismatische Wirkung ist jedoch durchgängig in dem Prismenbezugspunkt 22 realisiert. Die horizontale prismatische Wirkung beträgt somit im Prismenbezugspunkt 22 (P) 0. In dem Anpasspunkt 20 (Z) beträgt sie -0,6 cm/m. Herkömmlicherweise liegt somit eine horizontale prismatische Wirkung im Fernbereich vor, wodurch die entsprechenden Verschlechterungen des Sehkomforts eintreten. Mittels eines Linsenelements gemäß der bevorzugten Ausführungsform der Erfindung kann dieser Nachteil jedoch beseitigt werden. Dabei sind die astigmatischen und sphärischen Abbildungsfehler für den Brillenträger für die Linsenelemente 10 in den Figuren 3 und 4 nahezu identisch.

Für die in den Figuren 3 und 4 dargestellten Linsenelemente 10 gelten die folgenden Angaben:
- Die Orientierung des Koordinatensystems für die Vorderfläche bestimmt sich folgendermaßen: die positive X-Achse zeigt in horizontale nasale Richtung und die Y-Achse in vertikale Richtung. Der Koordinatenursprung (0,0) des Koordinatensystems ist die geometrische Mitte des Linselements 10.
- Dioptrische Wirkung sph -1.0 dpt cyl 2.0 dpt Achse 135° Prisma 0 cm/m Basis 0°; Addition 2.00 dpt; Brechzahl = 1.60; Dickenreduktionsprisma 1.25 cm/m Basis 270°.
- Die Vorderfläche des Linsenelementes ist eine Gleitsichtfläche und die Rückfläche eine torische Fläche mit den Radien 159.5 mm und 104.0 mm.
- Mittendicke 2.0 mm.

Bezüglich dieses vorstehend definierten X,Y-Koordinatensystems ergeben sich die folgenden Koordinaten (X;Y) (in mm):
- Fern-Konstruktionspunkt (18): (0; 7)
- Anpasspunkt (20): (0; 4)
- Prismenbezugspunkt (22): (0; -2)
- Nah-Konstruktionspunkt (24): (2,0; -14).

Des Weiteren liegen die folgenden Gebrauchsbedingungen zugrunde: Vorneigung = 9°, Fassungsscheibenwinkel = 5°, Drehpunkt-Scheitelabstand = 25.5 mm, Pupillendistanz = 64 mm, Objektabstand Ferne = unendlich, Objektabstand Nähe = 380 mm, Fassung mit Scheibenlänge: 60,5 mm, Scheibenhöhe: 32 mm, horizontaler Abstand des Anpasspunkts zu dem nasalem Fassungsrand: 23 mm und vertikaler Abstand zu unterem Fassungsrand 20 mm.

Für den Verlauf der Hauptblicklinien 26, 28 in Fig. 3 gelten die folgenden Daten:

| **X** | **Y** | **Objektentfernung (mm)** |
|---|---|---|
| 0.5 | 20.00 | 1000000.0 |
| 0.4 | 18.00 | 1000000.0 |
| 0.4 | 16.00 | 1000000.0 |
| 0.3 | 14.00 | 1000000.0 |
| 0.2 | 12.00 | 1000000.0 |
| 0.2 | 10.00 | 1000000.0 |
| 0.1 | 8.00 | 1000000.0 |
| 0.0 | 6.00 | 1000000.0 |
| 0.0 | 4.00 | 1000000.0 |
| 0.1 | 2.00 | 5844.1 |
| 0.3 | 0.00 | 1929.4 |
| 0.5 | -2.00 | 1144.8 |
| 0.8 | -4.00 | 807.4 |
| 1.0 | -6.00 | 619.0 |
| 1.3 | -8.00 | 498.4 |
| 1.6 | -10.00 | 414.1 |
| 1.7 | -12.00 | 380.0 |
| 1.7 | -14.00 | 380.0 |
| 1.6 | -16.00 | 380.0 |
| 1.6 | -18.00 | 380.0 |
| 1.5 | -20.00 | 380.0 |

Für den Verlauf der Hauptblicklinien 26, 28 in Fig. 4 gelten die folgenden Daten:

| **X** | **Y** | **Objektentfernung (mm)** |
|---|---|---|
| 0.7 | 20.00 | 1000000.0 |
| 0.6 | 18.00 | 1000000.0 |
| 0.6 | 16.00 | 1000000.0 |
| 0.5 | 14.00 | 1000000.0 |
| 0.4 | 12.00 | 1000000.0 |
| 0.3 | 10.00 | 1000000.0 |
| 0.3 | 8.00 | 1000000.0 |
| 0.2 | 6.00 | 1000000.0 |
| 0.1 | 4.00 | 1000000.0 |
| 0.2 | 2.00 | 5850.3 |
| 0.4 | 0.00 | 1930.3 |
| 0.7 | -2.00 | 1145.2 |
| 0.9 | -4.00 | 807.6 |
| 1.2 | -6.00 | 619.2 |
| 1.4 | -8.00 | 498.5 |
| 1.7 | -10.00 | 414.3 |
| 1.9 | -12.00 | 380.0 |
| 1.8 | -14.00 | 380.0 |
| 1.8 | -16.00 | 380.0 |
| 1.8 | -18.00 | 380.0 |
| 1.7 | -20.00 | 380.0 |

Die folgende Tabelle zeigt die Pfeilhöhen der Gleitsichtflächen der Linsenelemente in den Figuren 3 und 4:

| **Y/X:** | **-21.0** | **-18.0** | **-15.0** | **-12.0** | **-9.0** | **-6.0** | **-3.0** | **0.0** | **3.0** | **6.0** | **9.0** | **12.0** | **15.0** | **18.0** | **21.0** |
|---|---|---|---|---|---|---|---|---|---|---|---|---|---|---|---|
| **21.0:** | ******* | ******* | ******* | ******* | -1.966 | -1.848 | -1.804 | -1.833 | -1.935 | -2.111 | -2.360 | ******* | ******* | ******* | ****** |
| **18.0:** | ******* | ******* | ******* | -1.670 | -1.481 | -1.366 | -1.324 | -1.355 | -1.459 | -1.637 | -1.888 | -2.213 | ******* | ******* | ****** |
| **15.0:** | ******* | ******* | -1.517 | -1.258 | -1.072 | -0.960 | -0.920 | -0.953 | -1.059 | -1.238 | -1.490 | -1.817 | -2.219 | ******* | ****** |
| **12.0:** | ******* | -1.508 | -1.178 | -0.922 | -0.739 | -0.629 | -0.591 | -0.626 | -0.733 | -0.912 | -1.166 | -1.494 | -1.898 | -2.380 | ****** |
| **9.0:** | -1.645 | -1.243 | -0.916 | -0.662 | -0.481 | -0.372 | -0.336 | -0.372 | -0.480 | -0.660 | -0.914 | -1.243 | -1.650 | -2.135 | -2.701 |
| **6.0:** | -1.460 | -1.058 | -0.731 | -0.477 | -0.297 | -0.189 | -0.154 | -0.190 | -0.298 | -0.479 | -0.735 | -1.067 | -1.477 | -1.967 | -2.538 |
| **3.0:** | -1.358 | -0.955 | -0.626 | -0.371 | -0.188 | -0.079 | -0.043 | -0.080 | -0.188 | -0.371 | -0.631 | -0.968 | -1.384 | -1.881 | -2.459 |
| **0.0:** | -1.346 | -0.940 | -0.608 | -0.348 | -0.161 | -0.047 | -0.007 | -0.041 | -0.151 | -0.339 | -0.605 | -0.951 | -1.376 | -1.880 | -2.465 |
| **-3.0:** | -1.425 | -1.016 | -0.680 | -0.415 | -0.220 | -0.097 | -0.048 | -0.078 | -0.189 | -0.384 | -0.660 | -1.017 | -1.452 | -1.967 | -2.560 |
| **-6.0:** | -1.596 | -1.183 | -0.842 | -0.569 | -0.365 | -0.230 | -0.171 | -0.194 | -0.307 | -0.509 | -0.798 | -1.167 | -1.615 | -2.141 | -2.745 |
| **-9.0:** | -1.862 | -1.443 | -1.094 | -0.812 | -0.596 | -0.449 | -0.379 | -0.397 | -0.510 | -0.719 | -1.020 | -1.403 | -1.865 | -2.404 | -3.021 |
| **-12.0:** | ******* | -1.795 | -1.436 | -1.144 | -0.916 | -0.756 | -0.678 | -0.692 | -0.805 | -1.019 | -1.330 | -1.727 | -2.204 | -2.758 | ****** |
| **-16.0:** | ******* | ******* | -1.871 | -1.567 | -1.326 | -1.156 | -1.072 | -1.085 | -1.199 | -1.416 | -1.732 | -2.141 | -2.635 | ******* | ****** |
| **-18.0:** | ******* | ******* | ******* | -2.081 | -1.830 | -1.651 | -1.564 | -1.578 | -1.694 | -1.912 | -2.233 | -2.652 | ******* | ******* | ****** |
| **-21.0:** | ******* | ******* | ******* | ******* | -2.427 | -2.245 | -2.157 | -2.173 | -2.291 | -2.512 | -2.837 | ******* | ******* | ****** | ****** |

Die Tabelle der Pfeilhöhen zeigt die Abstände zu einer Bezugsebene für die Gitterpunkte eines äquidistanten Gitters. Die Tabelle zeigt die Abstände der Gleitsichtfläche zu einer Bezugsebene, deren Ursprung in X-, Y-Richtung die geometrische Mitte des Gleitsichtglases ist. Die Lage der Bezugsebene im Raum für die Beispielgläser in den Fig. 3 und 4 ergibt sich für den Fachmann aus den angegebenen Werten für die Vorneigung und den Fassungsscheibenwinkel der Linsenelemente. Die Z-Richtung zeigt dabei in Lichtrichtung, d.h. ein negativer Pfeilhöhenwert beschreibt einen näher am Auge liegenden Flächenpunkt, ein positiver Pfeilhöhenwert beschreibt einen weiter entfernt von dem Auge liegenden Flächenpunkt.

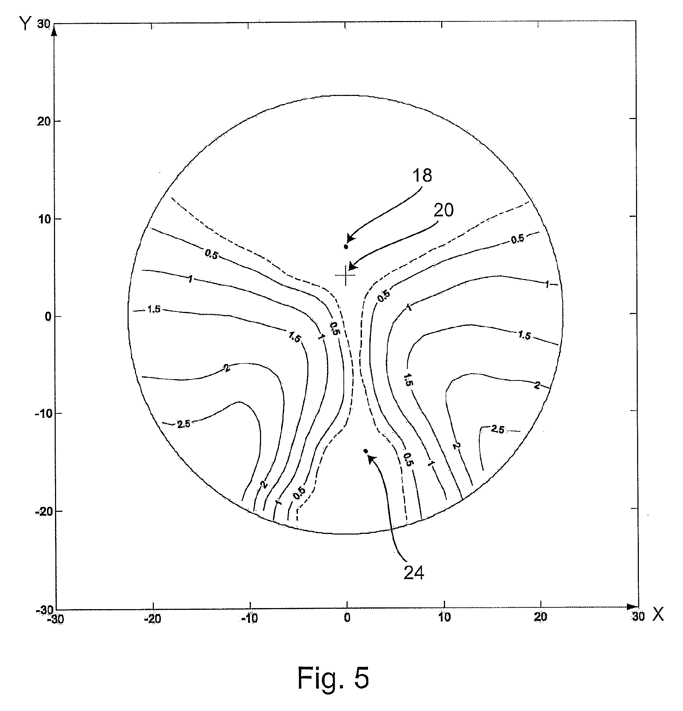

Fig. 5 zeigt eine Verteilung des astigmatischen Abbildungsfehlers bzw. der absoluten astigmatischen Differenzen der astigmatischen Wirkungsanteile der fokussierenden Wirkungen des auch in Fig. 3 gezeigten Linsenelements 10.

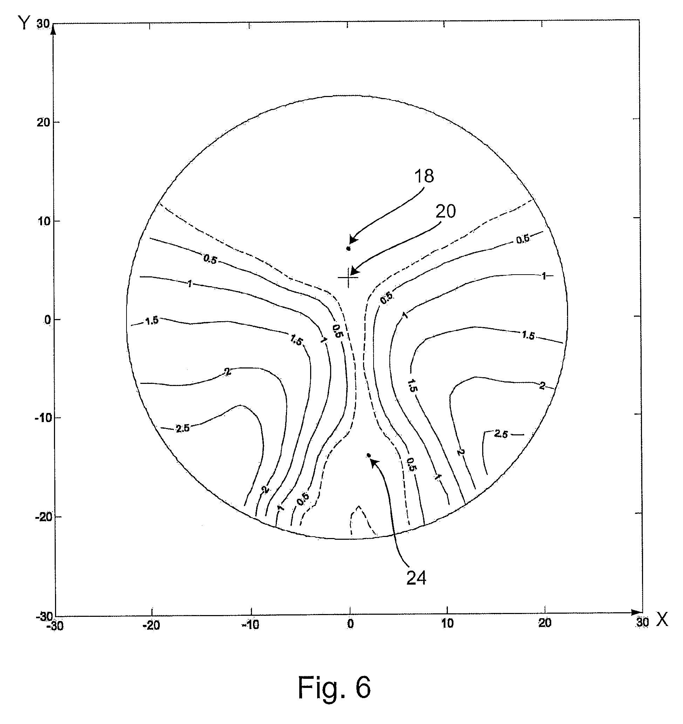

Fig. 6 zeigt eine Verteilung des astigmatischen Abbildungsfehlers bzw. der absoluten astigmatischen Differenzen der astigmatischen Wirkungsanteile der fokussierenden Wirkungen des in Fig. 4 gezeigten üblichen Linsenelements. Eine Änderung der Abbildungsgüte zwischen den in den Fig. 3 und 4 dargestellten Linsenelementen ist nur sehr gering.

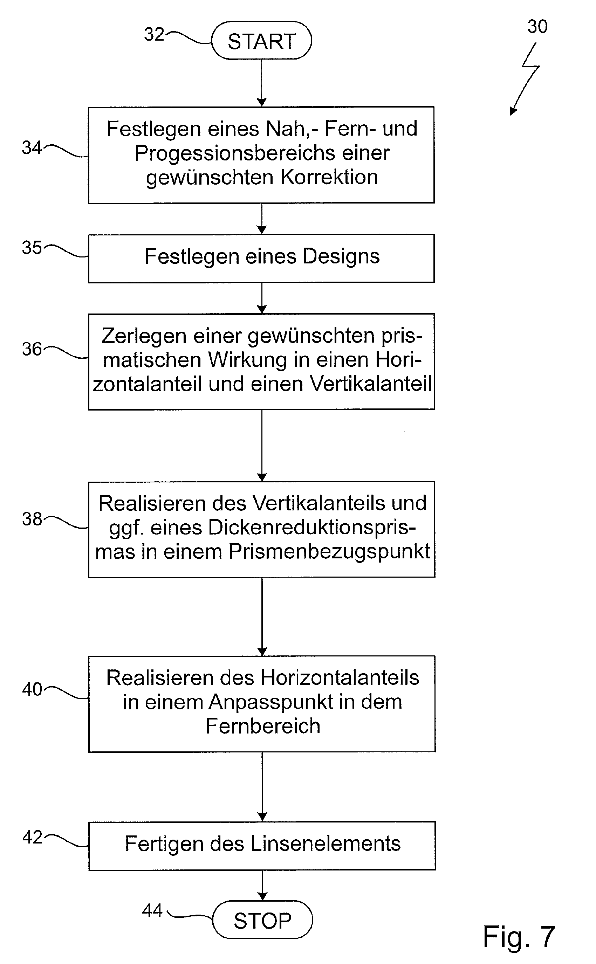

Fig. 7 zeigt eine bevorzugte Ausführungsform eines Verfahrens 30. Das Verfahren beginnt in einem Startschritt 32

Zunächst werden in einem Schritt 34 bei einem Entwerfen eines Linsenelements 10 für eine Gleitsichtbrille der Nah-, der Fern- und der Progressionsbereich 12, 14, 16 sowie die Lage der Bezugs- bzw. Konstruktionspunkte festgelegt.

In einem Schritt 35 erfolgt dann die Festlegung des "Designs" des Linsenelements 10. Ausgehend von der durch den Augenarzt vorgegebenen dioptrischen Wirkungsanforderung für das Linsenelement 10 wird bei Standardgleitsichtgläsern eine bestimmte Gleitsichtfläche für das Linsenelement 10 und bei individuell optimierten Gleitsichtgläsern eine Zielverteilung der sphärischen und astigmatischen Abbildungsfehler festgelegt (das "Design" des Linsenelementes). Unter "Design" ist dabei die Festlegung der Verteilung der astigmatischen und sphärischen Abbildungsfehler verstanden. Bei Standardgleitsichtgläsern ist bereits in einem Vorprozess eine Reihe von Gleitsichtflächen optimiert worden, aus denen entsprechend der aktuellen Verordnung des Augenarztes eine geeignete Fläche ausgewählt wird. Bei individuell optimierten Gleitsichtgläsern ist in einem Vorprozess eine Reihe von Ziel-Designs erstellt worden, aus denen ein gewünschtes Design für die aktuelle Verordnung des Augenarztes ausgewählt wird. Die Realisierung des "Designs" kann durch eine "individuelle Optimierung" erfolgen, worunter die Erzielung der gewünschten Verteilung der sphärischen und astigmatischen Fehler für die durch den Augenarzt vorgegebene dioptrische Wirkungsanforderung unter Berücksichtigung der individuellen Gebrauchsbedingungen verstanden wird. Gebrauchsbedingungen sind etwa die Vorneigung, der Fassungsscheibenwinkel, die Pupillendistanz, der Hornhautscheitelabstand (der Abstand der Rückfläche des Linsenelements zur Hornhaut), die Fassungsmaße und Objektentfernungen in Ferne und Nähe. In einem weiteren Schritt kann auch eine Durchbiegung der Vorderfläche des Linsenelements 10 festgelegt werden.

Bei Standardgleitsichtgläsern ist das Design durch die Auswahl der Gleitsichtfläche schon im Wesentlichen definiert, d.h. in Schritt 35 findet eine Auswahl der Gleitsichtfläche statt. Ist bei individuellen Gleitsichtgläsern das Ziel-Design festgelegt, so findet eine Optimierung der Gleitsichtfläche des Glases statt, so dass unter Berücksichtigung der speziellen dioptrischen Verordnung und unter Berücksichtigung der speziellen Gebrauchsbedingungen für den Brillenträger die entsprechend dem Ziel-Design gewünschte Verteilung der Abbildungsfehler nahezu erreicht wird. Vor dieser Optimierung muss bereits die Aufteilung der prismatischen Wirkung auf zwei verschieden Punkte erfolgt sein, um die prismatischen Forderungen bei der Optimierung geeignet zu berücksichtigen. Bei Standardgleitsichtgläsern hingegen können sich die Abbildungsfehler in Abhängigkeit von den speziellen Gebrauchsbedingungen und der speziellen dioptrischen Verordnung wegen der unveränderten Gleitsichtfläche vergrößern.

In einem Schritt 36 wird dann eine von dem Augenarzt vorgeschriebene prismatische Wirkung in einen Horizontalanteil und einen Vertikalanteil zerlegt. Nach Zerlegung der prismatischen Anforderungen in Horizontal- und Vertikalanteil werden die Prismenforderung in einem Schritt 38 durch eine geeignete Verkippung einer Vorderfläche zu einer Rückfläche des Linsenelements 10 realisiert. Darüber hinaus wird bei individuell optimierten Gleitsichtsichtgläsern bzw. Linsenelementen 10 die (geänderte) prismatische Forderung bei der individuellen Optimierung der Gleitsichtfläche mit berücksichtigt, um unabhängig von der prismatischen Anforderungen die gewünschte Zielverteilung der sphärischen und astigmatischen Abbildungsfehler zu erreichen.

Bei dem Entwerfen des Linsenelements 10 wird somit in einem Schritt 38 der Vertikalanteil und ggf. ein Dickenreduktionsprisma, um die Dicke des erzeugten Linsenelements 10 zu verringern, in einem festgelegten Prismenbezugspunkt 22 realisiert.

In einem Schritt 40 wird der Horizontalanteil der verordneten prismatischen Wirkung in einem Anpasspunkt 20 in dem Fernbereich 12 realisiert. Der Horizontal- und der Vertikalanteil der verordneten prismatischen Wirkung werden somit in verschiedenen Punkten realisiert.
Der Ablauf der Schritte 38 und 40 ist dabei an keiner zwingenden Reihenfolge unterworfen. Die Schritte 38 und 40 können aufeinanderfolgend stattfinden, es kann dabei auch alternativ der Schritt 40 vor dem Schritt 38 ausgeführt werden. Im Allgemeinen finden die Realisierungen der horizontalen und vertikalen Wirkungen jedoch zeitgleich bzw. ineinander verschränkt statt. Die Schritte 38 und 40 können somit gleichzeitig ausgeführt werden. Insbesondere ist bei der individuellen Optimierung eines Brillenglases eine gegenseitige Abhängigkeit aller Parameter, die in die Optimierung eingehen, auf das Optimierergebnis vorhanden, so dass eine gleichzeitige bzw. verzahnte Realisierung der prismatischen Forderungen notwendig sein kann.

Nach dem Schritt 40 ist die Entwurfsphase des Linsenelements 10 abgeschlossen und das Linsenelement 10 wird in einem Schritt 42 entsprechend den Entwurfsdaten gefertigt.

Das Verfahren 30 endet dann in einem Stopschritt 44. Ein Linsenelement gemäß einer bevorzugten Ausführungsform, wie es voranstehend beschrieben wurde, ist nun hergestellt. Anschließend kann das nächste Linsenelement 10 hergestellt werden.

In seinen Grundzügen ist das Verfahren 30 bei allen Linsenelementen 10 gleich. Unterschiede können sich daraus ergeben, ob Standardgleitsichtgläser oder individuell optimierte Gleitsichtgläser herzustellen sind. Bei Standardgleitsichtgläsern ist bereits in einem Vorprozess eine Reihe von Gleitsichtflächen optimiert worden, aus denen entsprechend der aktuellen Verordnung des Augenarztes eine geeignete Fläche ausgewählt wird. Bei individuell optimierten Gleitsichtgläsern ist in einem Vorprozess eine Reihe von Ziel-Designs erstellt worden, aus denen ein gewünschtes Design für die aktuelle Verordnung des Augenarztes ausgewählt wird.

So kann für Standardgleitsicht-Linsenelementen der folgende Verfahrensablauf vorgesehen sein:
1) Festlegung des Fern-, Progressions- und Nahbereichs.
2) Auswahl einer Gleitsichtfläche entsprechend 1) und entsprechend einer evtl. vorgegebenen Durchbiegung des Glases
3) Zerlegung der gewünschten prismatischen Wirkung in einen Horizontalanteil und einen Vertikalanteil
4) Realisierung des Vertikalanteils und gegebenenfalls des Dickenreduktionsprismas in einem Prismenbezugspunkt und des Horizontalanteils in einem Punkt im Fernbereich durch geeignete Verkippung von Vorder- und Rückfläche zueinander bei gleichzeitiger Bestimmung der durch die dioptrische Verordnung erforderliche Geometrie der Rezeptfläche.
5) Fertigen des Linsenelements.

Bei individuell optimierten Gleitsicht-Linsenelemente kann der folgende Verfahrensablauf vorgesehen sein:
1) Festlegung des Fern-, Progressions- und Nahbereichs.
2) Auswahl des Zieldesigns entsprechend 1) und Festlegung der Durchbiegung des Glases
3) Zerlegung der gewünschten prismatischen Wirkung in einen Horizontalanteil und einen Vertikalanteil
4) Realisierung des Vertikalanteils und gegebenenfalls des Dickenreduktionsprismas in einem Prismenbezugspunkt und des Horizontalanteils in einem Punkt im Fernbereich durch Optimierung (unter Einbeziehung der speziellen Gebrauchsbedingungen und der dioptrischen Verordnung) der Gleitsichtfläche im Hinblick auf das Ziel-Design und durch geeignete Verkippung von Vorder- und Rückfläche zueinander.
5) Fertigen des Linsenelements.

## Patentansprüche

1. Verfahren zum Herstellen eines Linsenelements (10) für eine Gleitsichtbrille mit mindestens einem Nahbereich (16) und einem Fernbereich (12), die unterschiedliche fokussierende Wirkungen aufweisen, sowie einer gesamtprismatischen Wirkung, **dadurch gekennzeichnet, dass** die gesamtprismatische Wirkung in ihren Horizontalanteil und ihren Vertikalanteil zerlegt wird und dass der Vertikalanteil der gesamtprismatischen Wirkung in einem ersten Punkt (22) des Linsenelements (10) und der Horizontalanteil der gesamtprismatischen Wirkung in einem von dem ersten Punkt (22) verschiedenen zweiten Punkt (20) des Linsenelements (10) realisiert wird, d.h. die prismatische Wirkung in dem jeweiligen Punkt (20, 22) entspricht derjenigen der Verordnung plus eines eventuellen Dickenreduktionsprismas.

2. Verfahren nach Anspruch 1, **dadurch gekennzeichnet, dass** der zweite Punkt (20) ein Punkt in dem Fernbereich (12) ist.

3. Verfahren nach Anspruch 1 oder 2, **dadurch gekennzeichnet, dass** weder der erste Punkt (22) noch der zweite Punkt (20) in dem Nahbereich (16) liegt.

4. Verfahren nach einem der Ansprüche 1 bis 3, **dadurch gekennzeichnet, dass** ein Dickenreduktionsprisma in dem ersten Punkt (22) realisiert wird.

5. Verfahren nach einem der Ansprüche 1 bis 4, **dadurch gekennzeichnet, dass** der Fernbereich (12) und der Nahbereich (16) derart ausgestaltet werden, dass sie in einem Progressionsbereich (14) kontinuierlich ineinander übergehen, wobei der erste Punkt (22) an einem Ort des Progressionsbereichs (14) liegt, an dem mindestens 20 % einer Addition des Linsenelements (10) erreicht sind.

## Claims

1. Method for producing a lens element (10) for progressive spectacles having at least one reading zone (16) and one distance zone (12) which have different focusing effects, and a total prismatic effect, **characterized in that** the total prismatic effect is decomposed into its horizontal component and its vertical component and **in that** the vertical component of the total prismatic effect is implemented at a first point (22) of the lens element (10), and the horizontal component of the total prismatic effect is implemented at a second point (20), different from the first point (22), of the lens element (10), that is to say the prismatic effect at the respective point (20, 22) corresponds to that of the prescription plus any possible thickness reduction prism.

2. Method according to Claim 1, **characterized in that** the second point (20) is a point in the distance zone (12).

3. Method according to Claim 1 or 2, **characterized in that** neither the first point (22) nor the second point (20) is in the reading zone (16).

4. Method according to one of Claims 1 to 3, **characterized in that** a thickness reduction prism is implemented at the first point (22).

5. Method according to one of Claims 1 to 4, **characterized in that** the distance zone (12) and the reading zone (16) are configured in such a way that they merge continuously into one another in a progression zone (14), the first point (22) being at a location of the progression zone (14) at which at least 20% of an addition of the lens element (10) is achieved.

## Revendications

1. Procédé de fabrication d'un élément de lentille (10) pour des lunettes à verres progressifs comprenant au moins une zone proche (16) et une zone distante (12), lesquelles présentent des effets de focalisation différents, ainsi qu'un effet prismatique total, **caractérisé en ce que** l'effet prismatique total est décomposé en sa partie horizontale et sa partie verticale, et **en ce que** la partie verticale de l'effet prismatique total est réalisée en un premier point (22) de l'élément de lentille (10) et la partie horizontale de l'effet prismatique total est réalisée en un deuxième point (20), différent du premier point (22), de l'élément de lentille (10), c'est-à-dire que l'effet prismatique au point respectif (20, 22) correspond à celui de la prescription plus un prisme de réduction d'épaisseur éventuel.

2. Procédé selon la revendication 1, **caractérisé en ce que** le deuxième point (20) est un point dans la zone distante (12).

3. Procédé selon la revendication 1 ou 2, **caractérisé en ce que** ni le premier point (22) ni le deuxième point (20) ne se situent dans la zone proche (16).

4. Procédé selon l'une quelconque des revendications 1 à 3, **caractérisé en ce qu'**un prisme de réduction d'épaisseur est réalisé dans le premier point (22).

5. Procédé selon l'une quelconque des revendications 1 à 4, **caractérisé en ce que** la zone distante (12) et la zone proche (16) sont configurées de telle sorte qu'elles se prolongent l'une dans l'autre de manière continue dans une région de progression (14), le premier point (22) se situant en un emplacement de la région de progression (14) auquel au moins 20 % d'une addition de l'élément de lentille (10) sont obtenus.
